# EUROPEAN PATENT APPLICATION

(11) **EP 2 372 980 A1**
(43) Date of publication of application: **05.10.2011**
(21) Application number: 09834238.9
(22) Date of filing: 22.06.2009
(51) Int. Cl.: H04M 1/02, H01Q 1/24, H01Q 17/00, H04M 1/03

(54) **PORTABLE WIRELESS DEVICE**

(30) Priority: 26.12.2008 JP 2008334009
(71) Applicant: Panasonic Corporation, Kadoma-shi Osaka 571-8501 (JP)
(72) Inventor: KAKITSU, Haruhiko, Osaka 540-6207 (JP); NAKANISHI, Hideo, Osaka 540-6207 (JP); SUZUKI, Yuichiro, Osaka 540-6207 (JP); SAITOH, Toshiaki, Osaka 540-6207 (JP); DOI, Makoto, Osaka 540-6207 (JP); JUDAI, Kanta, Osaka 540-6207 (JP); OOHIRA, Akinori, Osaka 540-6207 (JP)
(74) Representative: Grünecker, Kinkeldey, Stockmair & Schwanhäusser Anwaltssozietät
(86) International application number: PCT/JP2009/002828
(87) International publication number: WO 2010/073419

(57) **Abstract**

Provided is a portable wireless device wherein deterioration of antenna performance is eliminated, in the case where the portable wireless device is provided with a sliding mechanism wherein a metal member is used. A sliding unit (150) includes a first sliding member (103) and a second sliding member (104), and the first case (101) and the second case (102) are slidably connected. The first sliding member (103) is in a state of metal plate, and slides with the first case (103). The second sliding member (104) is in a state of metal plate and insulated from the first sliding member (103), and slides with the second case (102) on the first sliding member (103).

## Description

### Technical Field

The present invention relates to a portable radio device. More particularly, the present invention relates to a portable radio device in which multiple casings are connected with each other in a slidable fashion and are placed in an open state and a closed state following slide operations.

### Background Art

Conventionally, a portable radio device in which an upper casing and a lower casing are connected in a mutually slidable fashion is known. When this slide portable radio device is placed in an open state, the circuit board of the upper casing and the circuit board of the lower casing partly overlap on top of each other. Also, with a slide portable radio device, each circuit board and a metallic slide component to guide slide operations of casings are placed close to each other. Thus, in a conventional slide portable radio device, the circuit board of the upper casing and the circuit board of the lower casing are electromagnetically coupled through a slide component. As a result, with a conventional slide portable radio device, there is a problem that if an antenna is placed in the upper end side of the lower casing, the current that travels in the circuit board of the upper casing has the opposite phase to antenna current that travels in the lower casing of the circuit board, so that antenna performance is degraded. This kind of problem does not occur in a flip portable radio device in which the circuit board of the upper casing and the circuit board of the lower casing do not overlap one above the other in an open state, and therefore is specific to a slide portable radio device.

To solve the above problem, a method of placing an antenna in the lower end side of the lower casing and to allow an antenna current which has the same phase as the current travelling in the circuit board of the upper casing to travel in the circuit board of the lower casing is possible (for example, patent literature 1), or a method is possible to form a slide mechanism component with an insulating resin.

### Citation List

### Patent Literature

PTL1 Japanese Patent Application Laid-Open No.2006-217572

### Summary of Invention

### Technical Problem

However, there is a problem that if an antenna is provided in the lower end side of the lower casing, generally, the lower end side of the lower casing is a part held by a human hand, for example, during a call, so that a human hand becomes a dielectric and degrades antenna performance. Also, there is a problem that, if a slide mechanism component is formed with a resin, compared to the case of forming a slide mechanism component with metal, the mechanical strength becomes low and provides a factor of failure.

It is therefore an object of the present invention to provide a portable radio device that can prevent antenna performance degradation when a slide mechanism using a metal member is provided.

### Solution to Problem

A portable radio device employs a configuration to include: a first casing; a second casing; and a slide unit which slidably connects the first casing and the second casing, and, in this portable radio device, the slide unit has: a first slide member which is a metallic flat shape and which slides with the first casing; and a second slide member which is a metallic flat shape, which is insulated from the first slide member, and which slides with the second casing on the first slide member.

### Advantageous Effects of Invention

The present invention can prevent antenna performance degradation when a slide mechanism using a metal member is provided.

### Brief Description of the Drawings

FIG. 1 is a side view of a portable radio device in an open state according to an embodiment of the present invention;
FIG.2 is a side view of a portable radio device in a closed state according to an embodiment of the present invention;
FIG.3 is a plan view of a portable radio device in a closed state according to an embodiment of the present invention;
FIG.4 is a plan view of a portable radio device in an open state according to an embodiment of the present invention;
FIG.5 is an A - A' line cross sectional view of FIG.3;
FIG.6 is a back view of a slide unit according to an embodiment of the present invention;
FIG.7 is a front view of a slide unit according to an embodiment of the present invention;
FIG.8 shows a configuration which insulates between the first slide member and the second slide member according to an embodiment of the present invention; and
FIG.9 is a B - B' line cross sectional view of FIG.3.

### Description of Embodiments

Now, the embodiment of the present invention will be explained in detail with reference to the accompanying drawings.

### (Embodiment)

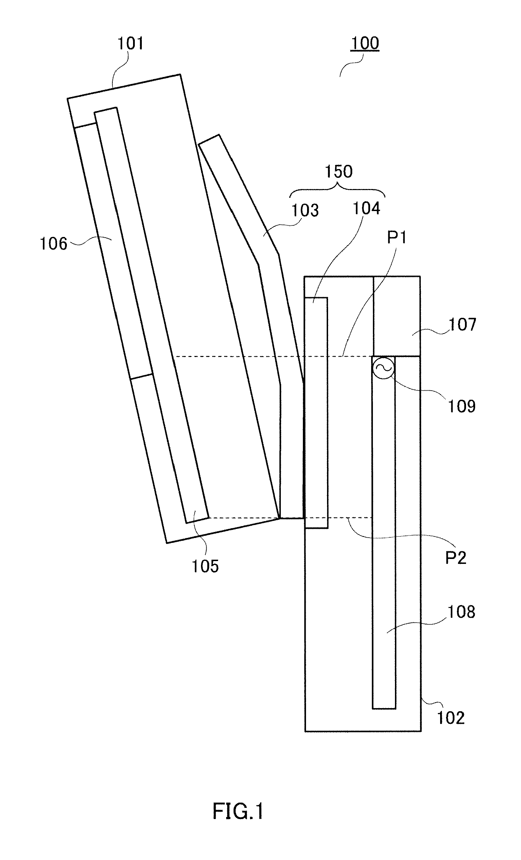

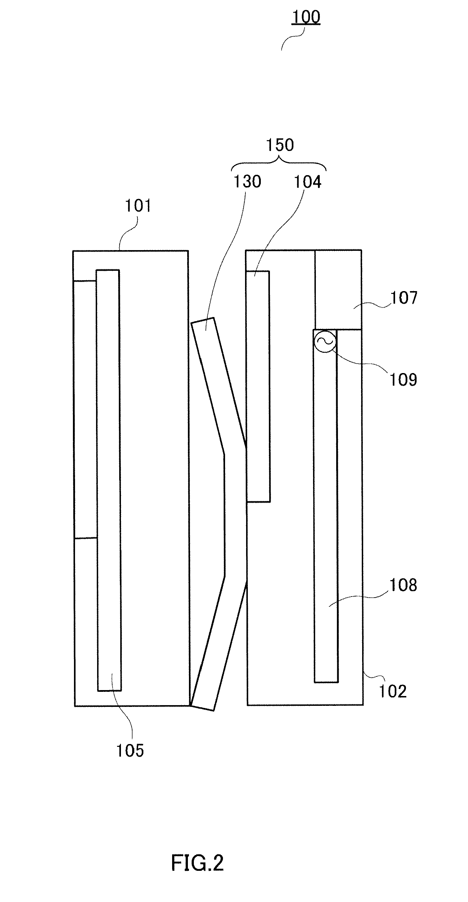

FIG.1 is a side view of portable radio device 100 in an open state according to an embodiment of the present invention. FIG.2 is a side view of portable radio device 100 in a closed state according to an embodiment of the present invention.

Portable radio device 100 is mainly formed with first casing 101, second casing 102, first slide member 103, second slide member 104, circuit board 105, display section 106, antenna 107, circuit board 108, and power feeding section 109. Also, first slide member 103 and second slide member 104 form slide unit 150.

First casing 101 is formed in a rectangular shape in a plain view and is slidably attached to second casing 102 to switch from the open state of FIG.1 to the closed state of FIG.2 or to switch from the closed state of FIG.2 to the open state of FIG.1, by sliding with first slide member 103 of slide unit 150. Thus, first casing 101 is attached to second casing 102 to be able to slide along the lengthwise direction of first casing 101 (a vertical direction of FIG.1 and FIG.2) by slide unit 150. In the open state of FIG.1, first casing 101 slides on second casing 104 with first slide member 103 that is bent to erect and, by this means, first casing 101 is held on second casing 102 in an erect state. First casing 101 has circuit board 105 and display section 106.

Second casing 102 is formed in a rectangular shape in a plan view and is slidably attached to first casing 101 to switch from the open state of FIG.1 to the closed state of FIG.2 or to switch from the closed state of FIG.2 to the open state of FIG.1, by sliding with second slide member 104 of slide unit 150. Also, second casing 102 has second slide member 104 and circuit board 108. Second casing 102 has antenna 107 in the upper end part (the upper end part of FIG.1 and FIG.2). In an open state, second casing 102 holds first casing 101 in an erect state as shown in FIG.1, and overlaps with first casing 101 in a closed state as shown in FIG.2.

First slide member 103 is a metallic flat shape and slides on second slide member 104 with first casing 101. First slide member 103 is formed by bending a metal plate to erect, so that, in the open state of FIG.1, first casing 101 is held in an erect state from second casing 102.

Second slide member 104 is a metallic flat shape and slides on first slide member 103 with second casing 102. Second slide member 104 is constituted from a metal plate.

Circuit board 105 is provided in first casing 101 and display section 106 such as LCD is attached.

Display section 106 is, for example, a liquid crystal display apparatus (LCD) and is attached to circuit board 105. Display section 106 shows, for example, an image data which portable radio device 100 receives.

By being attached to the upper end part of circuit board 108, antenna 107 is provided in the upper end part of second casing 102. By this means, when the lower side of second casing 102 is held by a human hand, antenna performance degradation caused by the hand can be prevented. Antenna 107 is fed power from power feeding section 109.

Circuit board 108 is provided in second casing 102, and antenna 107 and power feeding section 109 are provided in the upper end part.

Power feeding section 109 is provided in circuit board 108 and feeds power to antenna 107.

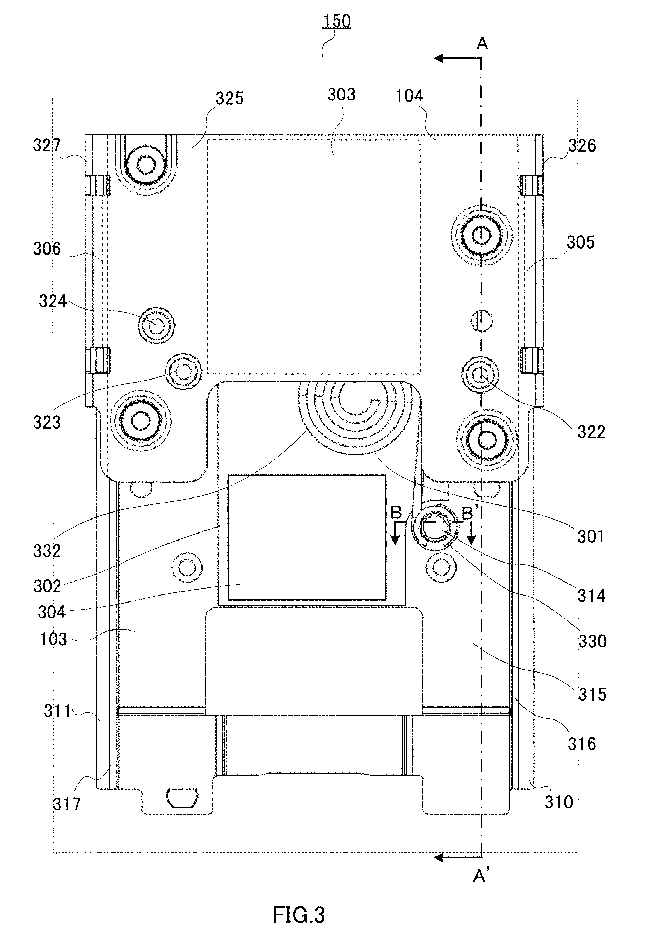

Next, a detailed configuration of slide unit 150 will be described using FIG.3 - FIG.7.

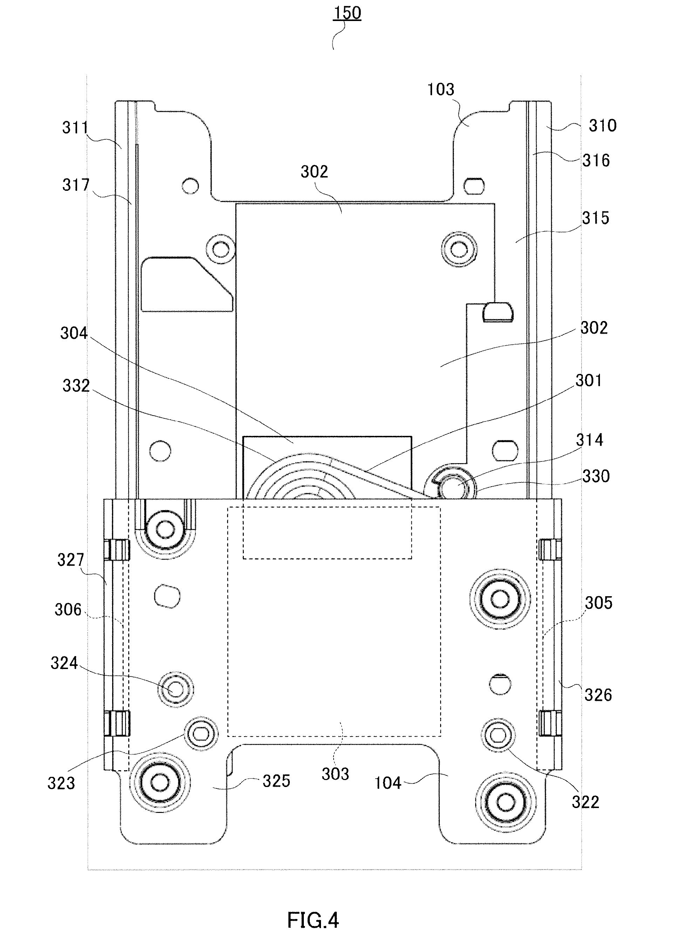

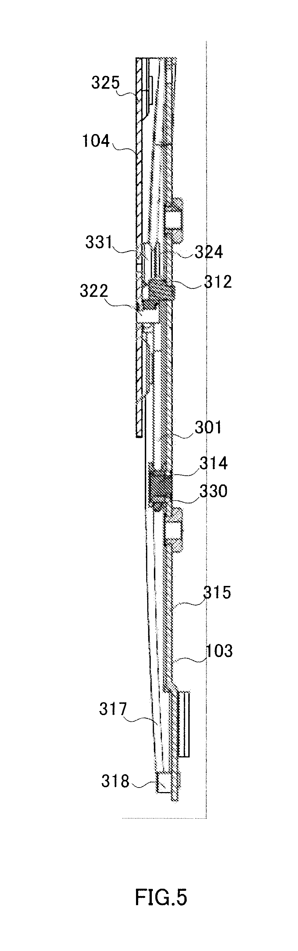

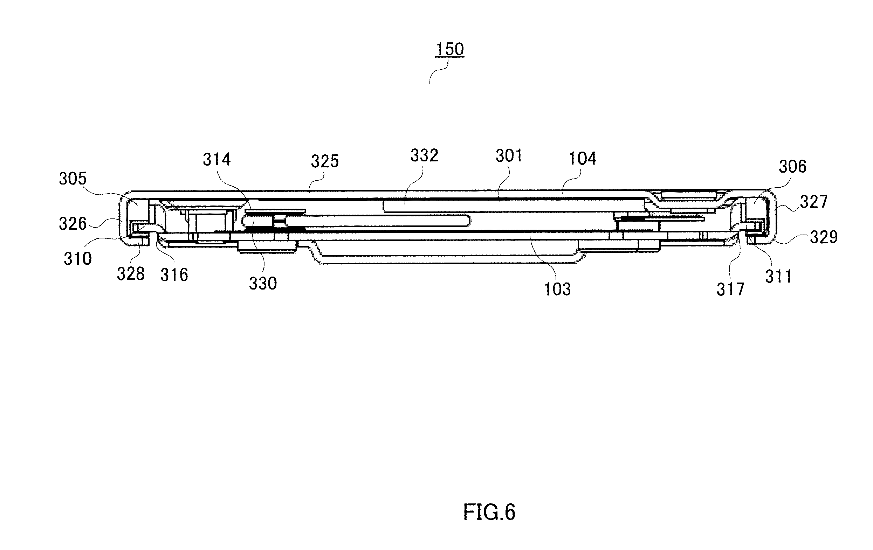

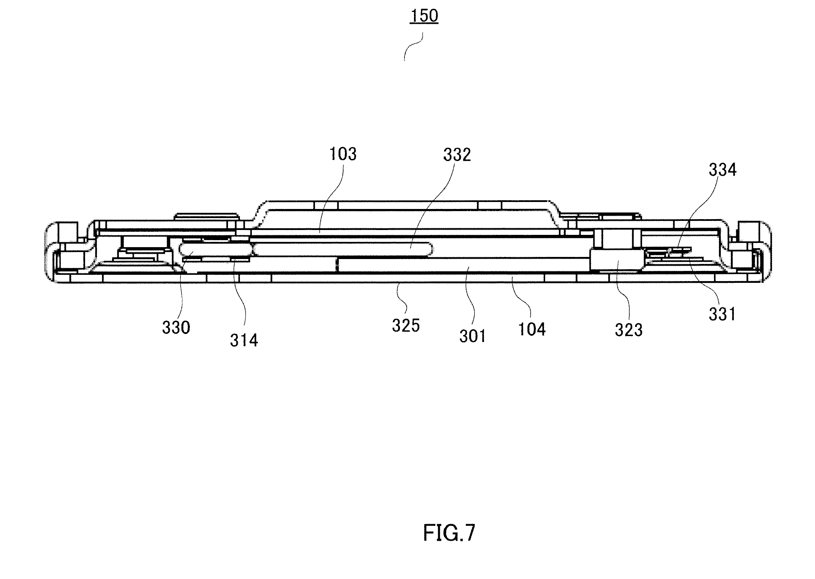

FIG.3 is a plan view of slide unit 150. FIG.4 is a plan view of slide unit 150. FIG.5 is an A - A' line cross sectional view of FIG.3. FIG.6 is a back view of slide unit 150. FIG.7 is a front view of slide unit 150.

Slide unit 150 is mainly formed with first slide member 103, second slide member 104, coil spring 301, non-conductive sheet 302 provided in first slide member 103, non-conductive sheet 303 provided in second slide member 104, wave absorber 304, and insulation members 305 and 306.

Each configuration will be described below.

First slide member 103 is formed with bottom panel part 315 of a flat shape, sidewall part 316 formed by bending diagonally upward, one lateral end part of bottom panel part 315 (a horizontal direction of FIG.3), sidewall part 317 formed by bending diagonally upward, the other lateral end of bottom panel part 315, rail part 310 that is bent outward parallel to bottom panel part 315 from the upper end part of sidewall part 316, rail part 311 that is bent outward parallel to bottom panel part 315 from the upper end part of sidewall part 317.

First casing 103 has stopper member 312 attached to a through hole formed in bottom panel part 315. First casing 103 has holding member 314 attached to a through hole formed in bottom panel part 315.

Second slide member 104 is formed with top panel part 325 of a flat shape, sidewall part 326 that is formed by bending, perpendicularly downward, one perpendicular end part of second slide member 104 to a slide direction (a vertical direction of FIG.3), sidewall part 327 that is formed by bending, perpendicularly downward, the other perpendicular end part of second slide member 104 to a slide direction, bottom panel 328 that is bent inward parallel to top panel part 325 from the lower end part of sidewall part 326, bottom panel part 329 that is bent inward parallel to top panel part 325 from the lower end part of sidewall part 327.

Second casing 104 has stopper members 322 and 323 which are attached to a through hole formed in top panel part 325. Second casing 104 has holding member 324 which is provided in a through hole formed in top panel part 325.

Coil spring 301 is formed by winding one metal wire and is formed with engaging part 330 which engages to be movable with holding member 314 to be able to move on the outer periphery of holding member 314, engaging part 331 which engages with holding member 324 to be able to move on the outer periphery of holding member 324, and winding section 332 which is winded between engaging part 330 and engaging part 331. The insulating structure with respect to engaging part 330 of holding member 314 and the insulating structure with respect to engaging part 331 of holding member 324 will be described later.

Also, in coil spring 301 in the closed state of FIG.3, engaging part 331 and an upper part of winding section 332 are located between bottom panel part 315 and top panel part 325, and also engaging part 330 and a lower part of winding section 332 are exposed outside of top panel part 325. Also, in coil spring 301 in the open state of FIG.4, engaging part 330 and a lower part of winding section 332 are located between bottom panel part 315 and top panel part 325, and also engaging part 331 and an upper part of winding section 332 are exposed outside of top panel part 325.

Also, in coil spring 301, following slide operations of second slide member 104, winding section 332 moves inside slide unit 150, and holding members 314 and 324 compress winding section 332, which makes the diameter of winding section 332 smaller. If the compression caused by holding members 314 and 324 is released, coil spring 301 is returned to the original form by elastic deformation.

Non-conductive sheet 302 is sheet-shaped, and is provided on the moving trajectory of coil spring 301 which moves following slide operations in bottom panel part 315 of first slide member 103. Non-conductive sheet 302 is provided to prevent coil spring 301 and first slide member 103 from contacting and electrically connecting, when coil spring 301 moves inside slide unit 150. Non-conductive sheet 302 is, for example, attached to the opposite side of bottom panel part 315 from coil spring 301 by an adhesive.

Non-conductive sheet 303 is sheet-shaped, and in top panel part 325 of second slide member 104 is provided on the moving trajectory of coil spring 301 which moves following slide operations. Non-conductive sheet 303 is provided to prevent coil spring 301 and second slide member 104 from contacting and electrically connecting, when coil spring 301 moves inside slide unit 150. Non-conductive sheet 303 is, for example, attached to the opposite side of top panel part 325 from coil spring 301 by an adhesive.

In bottom panel part 315 of first slide member 103, wave absorber 304 is provided in the location where coil spring 301 is located in an open state. As the present invention, if wave absorber 304 is stuck on non-conductive sheet 302, it is possible to prevent antenna performance degradation more. Generally, a wave absorber is made of substances which prevent a reflection of electromagnetic-wave energy by converting electromagnetic-wave energy into heat energy, or by absorbing electromagnetic-wave energy as heat energy. For example, wave absorber 304 is formed by spreading and mixing a tiny metal magnetic body into resin. For example, display section 304 is attached to non-conductive sheet 302 by an adhesive. Here, the reason wave absorber 304 is provided is that coil spring 301 which is formed by winding a metal wire material may have an electrical length to work as an antenna in the frequency band used in portable radio device 100. Thus, wave absorber 304 absorbs electromagnetic-wave energy to prevent coil spring 301 from working as an antenna. Wave absorber 304 is not limited to a sheet shape, and it is possible to use any arbitrary shape or material as long as it can absorb electromagnetic-wave energy. It is possible to stick wave absorber 304 on non-conductive sheet 303 in addition to non-conductive sheet 302. If wave absorber 304 is non-conductive, it is equally possible to stick wave absorber 304 instead of non-conductive sheet 302 or non-conductive sheet 303.

Insulation member 305 is constituted from an insulating material such as a resin and has a U-shaped cross section (see FIG.6). Insulation member 305 is held to second slide member by top panel part 325, sidewall part 326, and bottom panel part 328 of second slide member 104. Then, held by the second slide member and mounted over rail part 310, insulation member 305 slides in a vertical direction of FIG.3 with second slide member 104 on rail part 310, guided by rail part 310. By this means, insulation member 305 insulates first slide member 103 and second slide member 104. The details of the insulating structure of first slide member 103 and second slide member 104 by insulation member 305 will be described later.

Insulation member 306 is constituted from an insulating material such as a resin, and has a U-shaped cross section. Insulation member 306 is held to second slide member by top panel part 325, sidewall part 327, and bottom panel part 329 of second slide member 104. Then, held by the second slide member and mounted over rail part 311, insulation member 306 slides in a vertical direction of FIG.3 with second slide member 104 on rail part 311, guided by rail part 311. By this means, insulation member 306 insulates first slide member 103 and second slide member 104. The details of the insulating structure of first slide member 103 and second slide member 104 by insulation member 306 will be described later.

Rail part 310 is formed, in first slide member 103, parallel to the lengthwise direction of first slide member 103 and the slide direction of second slide member 104.

Rail part 311 is formed, in first slide member 103, parallel to the lengthwise direction of first slide member 103 and the slide direction of second slide member 104.

Stopper member 312 is held in a through hole formed in first slide member 103, in a state sticking out toward second slide member 104. Also, by engaging with stopper member 322, stopper member 312 restricts movement in the closing direction (upward in FIG.3 and FIG.5) of second slide member 104 (see FIG.5).

Stopper member 313 is held in a through hole formed in first slide member 103, in a state sticking out toward second slide member 104. Also, by engaging with a stopper member (not shown) provided in second slide member 104, stopper member 313 restricts movement in a closing direction (upward in FIG.3) of second slide member 104.

Holding member 314 is cylindrical, and engaging part 330 of coil spring 301 is winded around its outer peripheral surface and also engages with engaging part 330 to be able to move along its outer peripheral surface when coil spring 301 moves following slide operations.

Bottom panel part 315 is parallel to a moving plane where coil spring 301 moves following slide operations of second slide member 104 with respect to first slide member 103. In bottom panel part 315, wave absorber 302 is provided on the moving trajectory of coil spring 301.

Stopper member 322 is held in a through hole formed in first slide member 104, in a state sticking out toward second slide member 103. Also, by engaging with stopper member 312, stopper member 322 restricts movement to a closed direction (upward in FIG.3) of second slide member 104.

Stopper member 323 is held in a through hole formed in first slide member 103, in a state sticking out toward second slide member 104. Also, by engaging with a stopper member (not shown) provided in first slide member 103, stopper member 323 restricts movement to a closed direction of second slide member 104.

Holding member 324 is cylindrical, and engaging part 331 of coil spring 301 is winded around its outer peripheral surface, and also engages with engaging part 330 to be able to move along its outer peripheral surface when coil spring 301 moves following slide operations.

Top panel part 325 is parallel to a moving plane on which coil spring 301 moves following slide operations of first slide member 103 with respect to second slide member 104.

The description of each configuration of unit 150 has been done in the above.

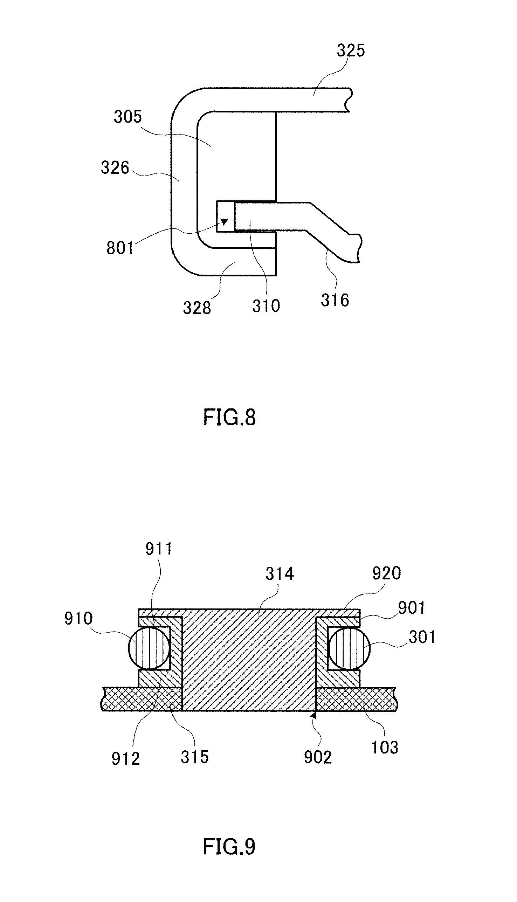

Next, a configuration to insulate first slide member 103 and second slide member 104 will be described using FIG.8. FIG.8 shows a configuration to insulate first slide member 103 and second slide member 104.

In FIG.8, insulation member 305 is held to second slide member by top panel part 325, sidewall part 326, and bottom panel part 328 of second slide member 104. Also, insulation member 305 has groove part 801 which slidably engages with rail part 310. Groove part 801 is provided to extend along a slide direction of second slide member 104.

By this means, first slide member 103 and second slide member 104 slides through insulation member 305, and are mutually insulated upon slide operations.

Now, the same applies to holding member 306 and the description will be omitted.

Next, a configuration to insulate coil spring 301 and first slide member 103 will be described using FIG.9. FIG.9 is a B - B' line cross sectional view of FIG.3.

In FIG.9, holding member 314 is made by a metal material, substantially cylindrical, and also attached to first slide member 103 by being pressed into through hole 902 formed in bottom panel part 315 of first slide member 103. In holding member 314, caulking part 920 is formed in an upper part to prevent insulation member 901 from loosening upward.

Insulation member 901 is attached to a periphery of holding member 314. Insulation member 901 has main unit part 910, upper flange 911 that is provided in an upper end part and that stretches outward from insulation member 910, and flange part 912 that is provided in a lower end part and that stretches outward from insulation member 910.

By engaging with main unit part 910 of insulation member 901, engaging part 330 of coil spring 301 is prevented from loosening upward and downward by upper flange part 911 and lower flange part 912 and also is kept by insulation member 901. Held by insulation member 901, engaging part 330 of coil spring 301 engages with insulation member 901 to be able to move along the periphery of main unit part 910 with the movement of coil spring 301.

Now, the same applies to holding member 324 and the description will be omitted.

Next, the operations of slide unit 150 will be described.

At first, the operation to switch from a closed state to an open state will be described.

In the state of FIG.2, if a user slides first casing 101 upward in FIG.2, first slide member 103 slides upward in FIG.3 to second slide member 104. Specifically, insulation member 305 slides along rail part 310 and also insulation member 306 slides along rail part 311.

Following slide operations, in coil spring 301, winding section 332 is compressed by holding members 314 and 324, and moves between non-conductive sheet 302 and non-conductive sheet 303 by reducing its diameter by elastic deformation.

Next, when first slide member 103 slides to some extent, the compression caused by holding members 314 and 324 is released, so that coil spring 301 is returned to the original form. The returning force of coil spring 301 on returning to the original form energizes first slide member 103 in an end direction of a slide (upward in FIG.3).

Next, stopper member 322 and stopper member 323 of second slide member 104 engages with a stopper member (not shown) provided in first slide member 103, so that first slide member 103 stops the slide operations and be in an open state (the states of FIG.1 and FIG.4). In this case, coil spring 301 is located between non-conductive sheet 302 and wave absorber 304, and non-conductive sheet 303. Also, a user communicates by, for example, making a telephone call in this state.

Next, the operation to switch from an open state to a closed state will be described.

In the state of FIG.1, if the user slides first casing 101 downward in FIG.1, first slide member 103 slides downward with respect to second slide member 104. Specifically, insulation member 305 slides along rail part 310 and also insulation member 306 slides along rail part 311.

In association with the initial operations of the above slide operations, in coil spring 301, winding section 332 is compressed by holding members 314 and 324, and moves between non-conductive sheet 302 and non-conductive sheet 303 by reducing its diameter by elastic deformation.

Next, when first slide member 103 slides to some extent, the compression caused by holding members 314 and 324 is released, so that coil spring 301 is returned to the original form. A returning force caused by coil spring 301 on returning to the original form, first slide member 103 energizes in an end direction of a slide (downward in FIG.4).

Next, stopper member 322 of second slide member 104 engages with stopper member 312 of first slide member 103, and also stopper member 323 of second slide member 104 engages a stopper member (not shown) provided in first slide member 103, so that first slide member 103 stops slide operations and is placed in a closed state (the states of FIG.2 and FIG.3).

Incidentally, as the present embodiment, in a case where first casing 101 is held in an erect state with respect to second casing 102, it is necessary to bend and erect the rail to guides the slides, and in a structure only providing metal rails at both ends of casing, the rail itself is thin, so that it is difficult to bend and erect the rail accurately. Thus, as the present invention, by forming a slide unit by first slide member 103 shaped in a metal plate and second slide member 104, it is possible to bend the rail to erect accurately and easily.

Therefore, by insulating the first slide member and the second slide member and insulating a coil spring of the first slide member or a coil spring of the second slide member, the present embodiment can prevent antenna performance degradation when a slide mechanism using a metal member is provided. Also, according to the present embodiment, circuit boards do not electromagnetically couple with each other through a slide unit, so that miniaturization and thinning are possible. The present embodiment provides a wave absorber on the moving trajectory of a coil spring and consequently a coil spring functions as an antenna, so that it is possible to prevent antenna performance degradation. The present embodiment can make a portable radio device thinner by making a wave absorber a sheet shape.

Although with the present embodiment coil spring 301 is insulated from both first slide member 103 and second slide member 104, the present invention is not limited to this, and it is possible to achieve the effect of the present invention by insulating coil spring 301 from at least one of first slide member 103 and second slide member 104. Although with the present embodiment a wave absorber is provided in first slide member 103, the present invention is not limited to this, and it is equally possible to provide a wave absorber in second slide member 104. Although with the present embodiment first casing 101 slides as erecting from second casing 102 and switches from a closed state and an open state, the present invention is not limited to this, first casing 101 may slide from a closed state to an open state, and that, a slide structure may apply an arbitrary method. Although with the present embodiment insulation members 305 and 306 which insulate first slide member 103 and second slide member 104 are provided in second slide member 104, the present invention is not limited to this, and it is equally possible to provide insulation members 305 and 306 in first slide member 103.

The disclosure of Japanese Patent Application No.2008-334009, filed on December 26, 2008 including the specification, drawings and abstract, is incorporated herein by reference in its entirety.

### Industrial Applicability

A portable radio device of the present invention is especially suitable to connect a plurality of casings in a mutually slidable fashion and which is placed them in an open state and a closed state in response to slide operations.

## Claims

1. A portable radio device comprising:
a first casing;
a second casing;
and a slide unit which slidably connects the first casing and the second casing, wherein the slide unit comprises:
a first slide member which is a metallic flat shape and which slides with the first casing; and
a second slide member which is a metallic flat shape, which is insulated from the first slide member, and which slides with the second casing on the first slide member.

2. The portable radio device according to claim 1, wherein the slide unit further comprises a coil spring that energizes the first slide member or the second slide member in a terminating direction of the slide by reducing its diameter by elastic deformation following an initial operation of the slide and then returning to a original form, and that is insulated from at least one of the first slide member and the second slide member.

3. The portable radio device according to claim 2, wherein:
the coil spring moves inside the slide unit following slide operations; and
the slide unit further comprises a non-conductive sheet which is provided on the moving trajectory of the coil spring.

4. The portable radio device according to claim 2, wherein:
the first casing and the second casing are placed in an open state and a closed state by the slide;
the coil spring moves inside the slide unit following the slide operations; and
the slide unit further comprises a wave absorber which is provided in a place where the coil spring is located in the open state.

5. The portable radio device according to claim 1 wherein the slide unit holds the first casing in an erect state with respect to the second casing by the slide operations.

6. The portable radio device according to claim 1, wherein:
the slide unit further comprises an insulation member which is held by the first slide member and the second slide member and which mutually insulates the first slide member and the second slide member; and
the first slide member and the second slide member slide with respect to each other through the insulation member.
